Europäisches Patentamt

European Patent Office

Office européen des brevets

(11) Publication number: **0 209 065**
**B1**

# EUROPEAN PATENT SPECIFICATION

(45) Date of publication of patent specification: **07.11.90**

(21) Application number: **86109328.4**

(22) Date of filing: **08.07.86**

(51) Int. Cl.⁵: **C 01 B 5/00, F 22 B 1/00,
C 23 C 8/16**

(54) **Method for supplying an oxygen gas containing steam for the surface treatment of semiconductor wafers.**

(30) Priority: **15.07.85 JP 156708/85**

(43) Date of publication of application:
**21.01.87 Bulletin 87/04**

(45) Publication of the grant of the patent:
**07.11.90 Bulletin 90/45**

(84) Designated Contracting States:
**DE FR GB**

(56) References cited:
**EP-A-0 069 222
EP-A-0 140 073
DE-A-2 831 287
GB-A-1 182 062
US-A-4 377 067
US-A-4 388 892
US-E- 30 145**

**PATENT ABSTRACTS OF JAPAN, vol. 6, no. 81
(E-107)959r, 19 May 1982**

**PATENT ABSTRACTS OF JAPAN, vol. 6, no. 111
(E-114)989r, 22 July 1982**

(73) Proprietor: **Dainippon Screen Mfg. Co., Ltd.
1-1, Tenjinkitamachi Teranouchi-Agaru 4-chome
Horikawa-Dori
Kamikyo-ku Kyoto 602 (JP)**

(72) Inventor: **Sakai, Takamasa
110-1, Hirai-cho Kusatsu
Shiga (JP)**

(74) Representative: **Goddar, Heinz J., Dr. et al
FORRESTER & BOEHMERT Widenmayerstrasse
4/I
D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to a method for supplying oxygen gas containing uniformly distributed steam of high purity for use in a heat treatment process in which a heated wafer of semiconductor is fed with oxygen gas containing steam and the steam is deposited on the surface of the semiconductor wafer to form an oxide film thereon serving as a protective coat.

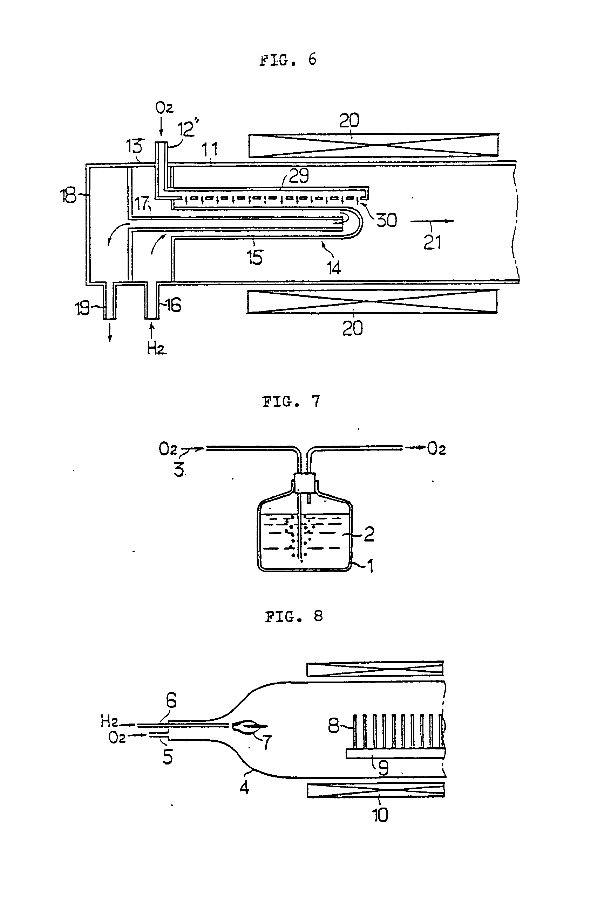

Figure 7 of the accompanying drawings shows a known oxygen gas feeding apparatus employing a bubbling method. In this prior feeder, oxygen gas is blown into pure water 2 stored in a sealed vessel 1 in the direction of the arrows in Figure 7, and the oxygen gas dampened by passing through the pure water 2 delivered to a treatment chamber (not shown). However, since a vessel or reservoir is used for the storage of the pure water, it is impossible with this known feeder to maintain the purity required in manufacturing semiconductor devices. Moreover, there is the drawback that the pure water in the vessel has to be changed or replenished often.

In order to meet such drawbacks, a so-called pyrogenic method is commonly used these days as shown in Figure 8. According to this method, oxygen gas is introduced into a quarz tube 4, in which semiconductor wafers 8 are aligned on a supporting board 9, by way of an inlet pipe 5, while hydrogen gas is introduced into the oxygen gas atmosphere by way of an inlet pipe 6, and steam is generated by combustion of the hydrogen gas in the oxygen in the tube 4. The oxygen gas containing the generated steam that flows through the tube 4 and is deposited on the surface of the semiconductor wafers 8 to form an oxide film thereon. In Figure 8, numeral 7 denotes a hydrogen flame and numeral 10 denotes a heater disposed along the outer wall of the quarz tube 4.

The aforementioned pyrogenic method indeed enables the purity required in the semiconductor manufacturing process to be maintained, but still has the following drawbacks:

(1) It is hard to control the hydrogen flame, and there is the possibility of failure in ignition, which may cause an explosion.

(2) The front end of the hydrogen flame may sometimes reaches the surface of the semiconductor wafer and damage it.

(3) An uneven gas stream, in which only the downstream portion of the hydrogen flame has a high steam content may be generated, whereby the results of the solid surface treatment become non-uniform, particularly in the case of the semiconductor wafer of large diameter, lowering the quality of such wafer.

Several attempts have been made to meet these drawbacks. According to one proposal, the quarz tube is elongated so as to put a larger distance between the hydrogen flame and the semiconductor wafer. According to Japanese Patent Publication (examined) Sho 59-53697, a nozzle of special design is proposed for the introduction of hydrogen gas. Further, as a method for achieving uniformity of hydrogen gas content, a separate combustion chamber system is employed wherein the combustion chamber is divided from the semiconductor heat treatment chamber, and the two chambers communicate with each other through a connector.

Even when such a system of separate chambers is employed, the problem (1) above still remains unsolved, and moreover the inner wall surface of the combustion chamber is damaged by the hydrogen flame, resulting in the problem of further impurities in the gas.

The invention aims enable solving of the aforesaid problems and, to this end, provides a method of supplying oxygen gas containing uniformly distributed steam of substantially high purity for use in a heat treatment process in which a semiconductor wafer is fed with an oxygen gas containing steam and the steam is deposited on the surface of the semiconductor wafer to form an oxide film thereon serving as a protective coat, where in part of hydrogen gas being induced is physically absorbed onto surface of hydrogen permeable film of oxidation catalyser, diffuses through said film uniformly over said surface of said film and reacts with excess of oxygen gas present on opposite side of said film so as to generate steam.

This method is carried out on an apparatus for supplying oxygen gas containing steam, comprising a hydrogen gas chamber and a combustion gas chamber separated by a hydrogen permeable membrane of oxidation catalyst, means for introducing oxygen gas into the combustion chamber and means for introducing hydrogen gas into the hydrogen chamber, so that the hydrogen gas diffuses through the catalytic membrane and reacts with the oxygen gas in the combustion chamber to generate steam. An apparatus with a similar structure is described in EP—A—0 069 222 for an other application.

In apparatus for carrying out the method of the invention part of the hydrogen gas induced into the hydrogen chamber is physically adsorpted onto the surface of the hydrogen permeable film of oxidation catalyzer, diffuses through the film uniformly over the surface of the film, and reacts with the excess of oxygen gas present on the opposite side of the film i.e., in the combustion chamber, to generate steam. Since such oxidative combustion of hydrogen gas takes place as catalytic oxidation, the reaction proceeds gently but steadily at a relatively low temperature, and when the quantity of gas is small, there is no flame. Further, since the oxidation reaction occurs not locally but uniformly over the film, mixing of the steam generated by the reaction is also even. When the hydrogen permeable film is formed from a catalyst having a property of selectively passing the hydrogen gas alone, the film also provides purification of the hydrogen gas, resulting in hydrogen of high purity. A remaining part of the hydrogen gas which does not pass through the hydrogen permeable film and any impurities are exhausted from the hydrogen chamber through an exhaust tube as bleed gas.

An oxygen gas feeder embodying the invention may provide the following advantages:

(1) Since the combustion (i.e., oxidation) of the hydrogen gas takes place gently by catalytic reaction at a relatively low temperature, combustion control is relatively easy, and there is less poossibility of ignition failure or danger of explosion.

(2) In the combustion of the hydrogen gas, the combustion area is not spread to the extent of generating flame, and accordingly the semiconductor wafer is not damaged by the flame. When employing a separate combustion chamber system, there is no possibility of introducing impurities due to the hydrogen flame damaging the inner wall of the combustion chamber.

(3) Since the combustion of hydrogen gas is evenly carried out all over the hydrogen permeable film of oxidation catalyst, the mixing of the generated steam with the oxygen gas (i.e., atmosphere gas) is also uniform and, as a result, even when treating a semiconductor wafer of large diameter, uniform and even surface treatment is applied all over the wafer surface enabling high qualtity thereof.

(4) When the hydrogen permeable film is formed of a material having property of selectively transmitting the hydrogen gas alone, such as palladium alloy steam generated by the combustion of the hydrogen gas is also of high purity satisfying the purity required in semiconductor manufacturing processes.

In order that the invention may be readily understood, an embodiment thereof will now be described, by way of example, with reference to the accompanying drawings, in which:

Figure 1 is a front view of apparatus for supplying oxygen gas containing steam embodying the invention;

Figures 2 to 6 are front views of several modified forms of apparatus embodying the invention; and

Figures 7 to 8 are front views showing showing respective prior art apparatus.

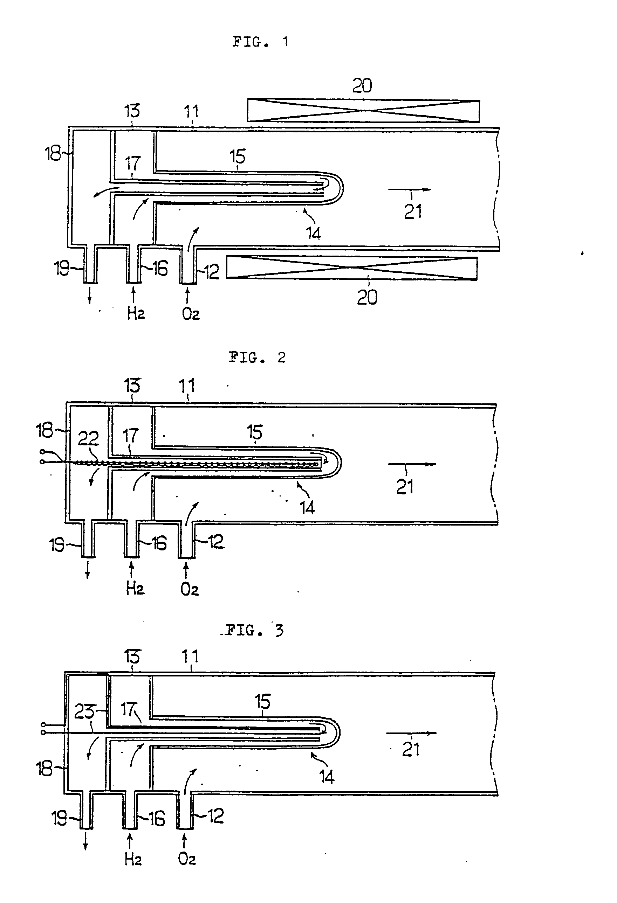

Referring to Figure 1, an oxygen gas feeding apparatus comprises a combustion chamber 11 made of quarz, in the right head part of which are placed semiconductor wafers (not illustrated) aligned on a supporting board. An oxygen gas inlet tube 12 communicates with the combustion chamber 11 and is connected to an oxygen gas supply (not illustrated).

Numeral 13 denotes a hydrogen chamber 13, a part 14 of which projects into the combustion chamber 11. A diaphragm 15 of the projecting part 14 is formed by a hydrogen permeable of film of oxidation catalyst, which physically adsorps hydrogen gas on its surface and diffuses and transmits the hydrogen while uniformly distributing it all over the film surface. This film undertake catalysis at a temperature of 300—700°C, and generates steam by oxidising the hydrogen. A known palladium alloy may be used as the material of the hydrogen permeable film. Such a film of palladium alloy is made of palladium (Pd), Silver (Ag) and Gold (Au). The catalysts for hydrogen can be performed by Pd alone, but a film of Pd alone lacks strength, and therefore Ag and Au are added to enhance the strength. The thickness of the hydrogen permeable film is desirably as thin as possible, but it is usually formed not more than 0.5 mm in thickness considering strength on the other hand. The hydrogen chamber is connected to a hydrogen gas inlet pipe 16, which communicates with a hydrogen gas supply (not illustrated). The hydrogen chamber 13 also communicates with an exhaust chamber 18 by way of an inner pipe 17 inserted therein, and the exhaust chamber 18 is connected to an oultet pipe 19. An external heater 20 is disposed along the outer wall of the combustion chamber 11 to heat the hydrogen permeable film and the gas generated by reaction. It is also possible to dispose a plurality of projecting portions 14 of the hydrogen chamber 13 in the combustion chamber 11.

By arranging the apparatus as described above, the diaphragm 15 composed of the hydrogen permeable film is heated to a temperature of 300—700°C. Then oxygen gas is introduced from the oxygen gas supply to the combustion chamber 11 by way of oxygen gas inlet pipe 12. At this time, pressure in the combustion chamber 11 is no more than 1 kg/cm². Under these conditions, hydrogen gas is introduced from the hydrogen gas supply source to the hydrogen gas chamber 13 through the hydrogen gas inlet pipe 16. The pressure of the introduced hydrogen gas is higher than the pressure within the combustion chamber 11 and is, for example, 10 kg/cm². Thus, a part of the hydrogen gas introduced to the hydrogen gas chamber 13 passes through the diaphragm 15 and reaches the surface of the diagram on the combustion chamber side, where the hydrogen gas reacts with the excess of oxygen gas present in the combustion chamber to generate steam. At this stage, the diaphragm 15 is heated itself by the oxidative reaction. Accordingly, if the quantity of hydrogen gas transmitted through the diaphragm 15 (in other words, the pressure of hydrogen gas supplied to the hydrogen gas chamber 13) is kept at a certain level, heating by the external heater 20 is not necessary since sufficient self-heating by oxidative reaction heat takes place. In addition, if a film of palladium alloy is used as the hydrogen permeable film, the palladium alloy has the property of refining (purifying) hydrogen as is well known and, even if the hydrogen gas supplied to the chamber 13 contains impurities, those impurities do not pass through the film but hydrogen alone is selectively transmitted. As a result, steam generated in the combustion chamber 11 is uniformly mixed with the excess of oxygen gas present in the chamber 11 in the form of atmospheric gas and the mixture is sent in the direction 21 to the semiconductor wafer (not illustrated). In the meantime, the hydrogen gas not transmitted through the diaphragm 15 and the impurities are discharged from the outlet pipe 19 by way of the inner pipe 17 and exhaust chamber 18.

Figures 2 and 3 illustrate further respective embodiments of the invention which differ from the apparatus shown in Figure 1 in having heating means which are not external heaters but internal heaters 22, 23 inserted in the inner pipe 17 disposed in the hydrogen gas chamber 13. In case of the internal heater 23, the inner pipe 17 itself constitutes part of the heater.

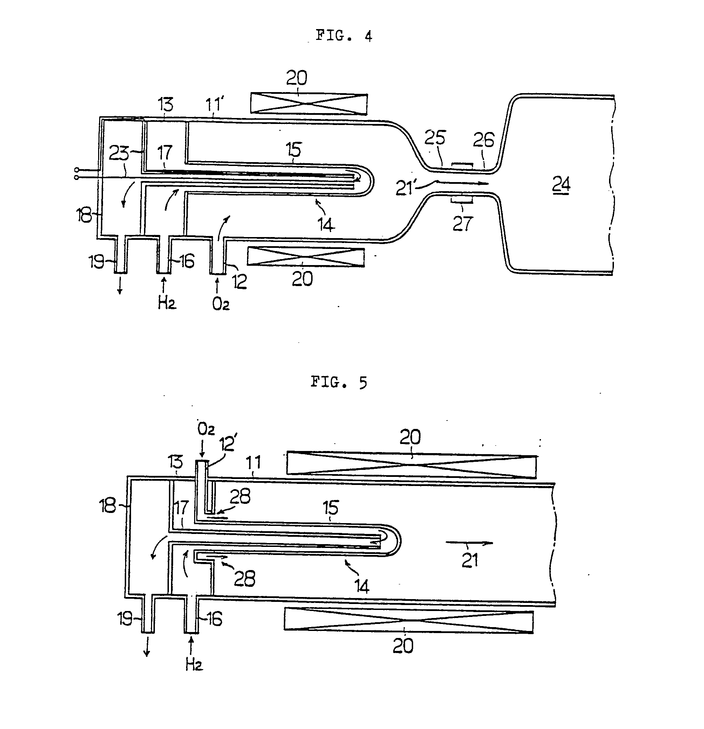

In all of the embodiments described above with reference to Figures 1 to 3, the combustion chamber and the treatment chamber for receiving semiconductor wafers are formed as a common chamber. On the other hand, Figure 4 shows a further embodiment of the invention, wherein a combustion chamber and a heat treatment chamber for semiconductor wafers are separated. In such apparatus, the basis structure of the combustion chamber 11' is not different from the embodiments described above, but the diameter of its free end is reduced to form a narrow neck portion 25. Similarly, the diameter of an adjacent end of the semiconductor wafer heat treatment chamber 24 is also narrowed to form a neck portion 26 and the two chambers 11' and 24 are joined together by a connector 27 which couples their neck portions 25, 26 together. Thus, mixed gas composed of steam generated in the combustion chamber 11' and oxygen gas which is the atmospheric gas in the chamber 11' flows to the heat treatment chamber 24 in the direction of the arrow 21', and during its passage through the narrowed neck portions 25, 26, the composition of the mixed gas becomes even and uniform. Either on external heater or an internal heater as shown in Figues 1 to 3 or, as shown in Figure 4, both an external heater 20 and an internal heater 23 may be used.

Figures 5 and 6 illustrate yet further respective embodiments of the invention respectively. In the apparatus shown in Figure 5, a gas outlet opening 28 of the oxygen gas inlet pipe 12' is disposed around a base portion of the diaphragm 15, so that the oxygen gas introduced into the combustion chamber 11 from the oxygen gas induction pipe 12' flows along the surface of the diaphragm 15 and cools the diaphragm 15 to prevent it from being overheated by combustion of hydrogen gas. On the other hand, in the apparatus shown in Figure 6, an oxygen gas inlet pipe 12' is extended into the combustion chamber 11, and an extending pipe portion 29 thereof is disposed alongside the diaphragm. Further, a plurality of gas outlets 30 are disposed as to face the surface of the diaphragm 15. In the case of this apparatus, the oxygen gas fed to the combustion chamber 11 from the oxygen gas inlet pipe 12'' is blown out perpendicularly to the surface of the diaphragm 15 from the gas outlets 30, and as a result air cooling is carried out more effectively than in the apparatus of Figure 5.

The scope of the invention is not limited to the description above and the embodiments shown in the drawings. For example, various other oxidation catalysts can be formed into a thin hydrogen osmotic film for use in a feeder embodying the invention instead of a palladium alloy film, so far as their stength and performance are of a certain level.

The features disclosed in the foregoing description, in the following claims and/or in the accompanying drawings may, both separately and in any combination thereof, be material for realising the invention in diverse forms thereof.

## Claims

1. A method of supplying oxygen gas containing uniformly distributed steam of substantially high purity for use in a heat treatment process in which a semiconductor wafer is fed with an oxygen gas containing steam and the steam is deposited on the surface of the semiconductor wafer to form an oxide film thereon serving as a protective coat, characterised in that part of hydrogen gas being induced is physically absorbed onto surface of hydrogen permeable film of oxidation catalyser, diffuses through said film uniformly over said surface of said film and reacts with excess of oxygen gas present on opposite side of said film so as to generate steam.

2. An apparatus for carrying out the method as recited in claim 1, comprising a hydrogen gas chamber (13) and a combustion gas chamber (11, 11') separated by a hydrogen permeable membrane of oxidation catalyser (15), means (12, 12', 12'') for introducing oxygen gas into the combustion chamber (11, 11'), and means (16) for introducing hydrogen gas into the hydrogen chamber (13), characterised in that the combustion chamber (11, 11') and a treatment chamber (24) for the wafer to be treated with the steam-containing oxygen gas are formed as separate inter-connected chambers.

3. An apparatus for carrying out the method as recited in claim 1, comprising a hydrogen gas chamber (13) and a combustion gas chamber (11, 11') separated by a hydrogen permeable membrane of oxidation catalyser (15), means (12, 12', 12'') for introducing oxygen gas into the combustion chamber (11, 11'), and means (16) for introducing gas into the hydrogen chamber (13), characterised in that an oxygen gas inlet tube (12') connected to the combustion chamber (11, 11') has an outlet opening (28) disposed adjacent to the catalytic membrane (15).

4. An apparatus for carrying out the method as recited in claim 1, comprising a hydrogen gas chamber (13) and a combustion gas chamber (11, 11') separated by a hydrogen permeable membrane of oxidation catalyser (15), means (12, 12', 12'') for introducing oxygen gas into the combustion chamber (11, 11'), and means (16) for introducing hydrogen gas into the hydrogen chamber (13), characterised in that a part of the hydrogen chamber (13) defined by the hydrogen permeable catalytic membrane (15) projects into the combustion chamber (11, 11').

5. An apparatus as recited in claim 3, characterised in that the outlet opening (28) of the oxygen gas inlet tube (12'') encircles the projecting part of the hydrogen chamber (13).

6. An apparatus as recited in claim 3, characterised in that the oxygen gas inlet tube (12'') extends alongside the projection part of the hydrogen chamber (13) and has a plurality of outlet openings (29) facing the catalytic membrane (15).

## Patentansprüche

1. Verfahren zum Zuführen von Sauerstoffgas mit gleichverteiltem Dampf von im wesentlichen hoher Reinheit zur Verwendung in einem Wärmebehandlungsverfahren, in dem einem Halbleiterplättchen Dampf enthaltendes Sauerstoffgas zugeführt und der Dampf auf die Oberfläche des Halbleiterplättchens aufgebracht wird, um einen Oxidfilm darauf auszubilden, der als Schutzschicht dient, dadurch gekennzeichnet, daß ein Teil des induzierten Sauerstoffgases physikalisch auf der Oberfläche eines wasserdurchlässigen Filmes eines Oxidations-Katalysators absorbiert wird, gleichmäßig über die Oberfläche des Filmes durch den Film diffundiert und mit dem überschüssigen Sauerstoffgas auf der gegenüberliegenden Seite reagiert, um Dampf zu erzeugen.

2. Vorrichtung zum Ausführen des Verfahrens nach Anspruch 1, das umfaßt: eine Wasserstoffgas-Kammer (13) und eine Knallgaskammer (11, 11'), die mittels einer wasserdurchlässigen Membran eines Oxidations-Katalysators (15) voneinander getrennt sind, Mittel (12, 12', 12'') zum Einleiten von Sauerstoffgas in die Knallgaskammer (11, 11') und Mittel (16) zum Einleiten von Wasserstoffgas in die Wasserstoffgas-Kammer (13), dadurch gekennzeichnet, daß die Knallgaskammer (11, 11') und eine Behandlungskammer (24) für das mit dem Dampf beinhaltenden Sauerstoffgas zu behandelnde Plättchen als separate, miteinander verbundene Kammern ausgebildet sind.

3. Vorrichtung zum Ausführen des Verfahrens nach Anspruch 1, das umfaßt: eine Wasserstoffgas-Kammer (13) und eine Knallgaskammer (11, 11'), welche mittels einer wasserdurchlässigen Membran eines Oxidations-Katalysators (15) voneinander getrennt sind, Mittel (12, 12', 12'') zum Einleiten von Sauerstoffgas in die Knallgaskammer (11, 11') und Mittel (16) zum Einleiten von Gas in die Wasserstoff-Kammer (13), dadurch gekennzeichnet, daß eine Sauerstoffgas-Einlaßröhre (12'), welche mit der Knallgaskammer (11, 11') verbunden ist, eine Auslaßöffnung (28) aufweist, die in der Nachbarschaft der katalytischen Membran (15) angeordnet ist.

4. Vorrichtung zum Ausführen des Verfahrens nach Anspruch 1, die umfaßt: eine Wasserstoffgas-Kammer (13) und eine Knallgaskammer (11, 11'), die mittels einer wasserdurchlässigen Membran eines Oxidations-Katalysators (15) voneinander getrennt sind, Mittel (12, 12', 12'') zum Einleiten von Sauerstoffgas in die Knallgaskammer (11, 11') und Mittel (16) zum Einleiten von Wasserstoffgas in die Wasserstoff-Kammer (13), dadurch gekennzeichnet, daß ein Teil der Wasserstoffkammer (13) von der wasserdurchlässigen katalytischen Membran (15) festgelegt ist, welche in die Knallgaskammer (11, 11') hineinragt.

5. Vorrichtung nach Anspruch 3, dadurch gekennzeichnet, daß die Auslaßöffnung (28) der Sauerstoffgas-Einlaßröhre (12'') den hervorragenden Teil der Wasserstoffgas-Kammer (13) umschließt.

6. Vorrichtung nach Anspruch 3, dadurch gekennzeichnet, daß die Sauerstoffgas-Einlaßröhre (12'') sich längsseits des hervorragenden Teiles der Wasserstoff-Kammer (13) erstreckt und mehrere Auslaßöffnungen (29) aufweist, welche der katalytischen Membran (15) gegenüberliegen.

## Revendications

1. Méthode d'alimentation en oxygène à l'état gazeux contenant de la vapeur d'eau uniformément distribuée de pureté très élevée destinée à être utilisée dans un procédé de traitement thermique dans lequel une plaquette de semi-conducteur est alimentée avec de l'oxygène à l'état gazeux contenant de la vapeur d'eau et la vapeur d'eau est déposée à la surface de la plaquette de semi-conducteur pour former un film d'oxyde sur celle-ci servant de revêtement protecteur, caractérisée en ce qu'une partie de l'hydrogène à l'état gazeux induit est absorbée physiquement à la surface d'un film perméable à l'hydrogène d'un catalyseur d'oxydation, diffuse au travers dudit film uniformément sur ladite surface dudit film et réagit avec l'oxygène à l'état gazeu présent à l'opposé dudit film de sorte à engendrer de la vapeur.

2. Appareil pour réaliser la méthode selon la revendication 1, comprenant une chambre à hydrogène gazeux (13) et une chambre de combustion (11, 11') séparées par une membrane perméable à l'hydrogène d'un catalyseur d'oxydation (15), des moyens (12, 12', 12'') pour introduire de l'oxygène à l'état gazeux dans la chambre de combustion (11, 11'), et des moyens (16) pour introduire de l'hydrogène à l'état gazeux dans la chambre à hydrogène (13), caractérisé en ce que la chambre de combustion (11, 11') et une chambre de traitement (24) pour la plaquette à traiter avec l'oxygène à l'état gazeux contenant de la vapeur sont sous forme de chambres séparées interconnectées.

3. Appareil pour réaliser la méthode selon la revendication 1, comprenant une chambre à hydrogène gazeux (13) et une chambre de combustion (11, 11') séparées par une membrane perméable à l'hydrogène d'un catalyseur d'oxydation (15), des moyens (12, 12', 12'') pour introduire de l'oxygène à l'état gazeux dans la chambre de combustion (11, 11'), et des moyens (16) pour introduire du gaz dans la chambre à hydrogène (13), caractérisé en ce qu'un tube d'entrée d'oxygène à l'état gazeux (12') connecté à la chambre de combustion (11, 11'), possède une ouverture de sortie (28) disposée de manière adjacente à la membrane catalytique (15).

4. Appareil pour réaliser la méthode selon la revendication 1, comprenant une chambre à hydrogène gazeux (13) et une chambre de combustion (11, 11') séparées par une membrane perméable à l'hydrogène d'un catalyseur d'oxydation (15), des moyens (12, 12', 12'') pour introduire de l'oxygène à l'état gazeux dans la chambre de combustion (11, 11'), et des moyens (16) pour introduire de l'hydrogène à l'état gazeux dans la chambre à hydrogène (13), caractérisé en ce qu'une partie de la chambre à hydrogène (13) définie par la membrane catalytique perméable à l'hydrogène (15) fait saillie dans la chambre de combustion (11, 11').

5. Appareil selon la revendication 3, caractérisé en ce que l'ouverture de sortie (28) du tube d'entrée d'oxygène à l'état gazeux (12'') entoure la partie en saillie de la chambre à hydrogène (13).

6. Appareil selon la revendication 3, caractérisé en ce que le tube d'entrée d'oxygène à l'état gazeux (12'') s'étend le long de la partie en saillie de la chambre à hydrogène (13) et possède une pluralité d'ouvertures de sortie (29) faisant face à la membrane catalytique (15).

# EP 0 209 065 B1

FIG. 1

FIG. 2

FIG. 3

1

FIG. 4

FIG. 5

FIG. 6

FIG. 7

FIG. 8